# FASCICULE DE BREVET EUROPEEN

(11) **EP 0 955 491 B1**
(45) Date de publication et mention de la délivrance du brevet: **27.09.2000**
(21) Numéro de dépôt: 97811032.8
(22) Date de dépôt: 31.12.1997
(51) Int. Cl.: F16K 15/14

(54) **Valve universelle**
Allgemein verwendbares Ventil
Universal valve

(30) Priorité: 09.12.1997 CH 283997
(43) Date de publication de la demande: 10.11.1999
(73) Titulaire: Sporting S.A., 1200 Genève (CH)
(72) Inventeur: Roussel, Jean, F-74160 St. Julien en Genevois (FR)
(74) Mandataire: Maureau, Philippe

(56) Documents cités:
- EP-A- 0 080 628
- EP-A- 0 253 748
- DE-A- 2 062 116
- DE-C- 387 190
- DE-C- 490 335

## Description

La présente invention a pour objet une valve universelle permettant de régler l'écoulement d'un fluide, liquide ou gaz, par exemple air, eau, huile, sang, etc, à travers un orifice d'une paroi, rigide, semi-rigide, souple, etc, limitant des espaces, dans lesquels règnent respectivement des pressions P₁, P₂, valve comprenant un corps tubulaire destiné à être fixé avec étanchéité en regard de l'orifice, d'un côté de la paroi, et un organe élastique déformable, soumis à l'action des pressions P₁ et P₂ commandant l'écoulement du fluide en fonction de ces pressions.

Le document DE 387 190 concerne une valve pour une enveloppe étanche de ballon, comprenant un corps tubulaire conique fixé sur la paroi intérieure de l'enveloppe, à l'intérieur duquel est monté un obturateur comportant une partie creuse conique à l'intérieur de laquelle est engagée une partie centrale également conique. La partie creuse conique comporte des trous qui sont obturés par le corps tubulaire conique et par la partie centrale conique de l'obturateur lorsque la pression à l'intérieur de l'enveloppe est supérieure à la pression extérieure.

Le document EP-A-0 253 748 concerne une valve monobloc conformée dans l'épaisseur même de la paroi d'une enceinte à isoler, et comportant une cavité intérieure communiquant avec l'extérieur par un premier trou et communiquant avec l'intérieur de l'enceinte par une pluralité de trous ménagés entre la paroi de l'enceinte elle-même et une partie de celle-ci formant élément de soupape, ces trous étant fermés lorsque la pression à l'intérieur de l'enceinte est supérieure à la pression extérieure.

Le document DE-A-2 062 116 concerne un clapet anti-retour pour soupape pneumatique comportant un corps dans lequel débouchent une amenée de fluide sous pression, une sortie vers un utlisateur et une mise à l'échappement. Un clapet est monté coulissant dans la soupape, pour permettre soit l'alimentation de l'utilisateur à partir de la source de pression avec fermeture de la mise à l'échappement, soit la mise à l'échappement de l'utilisateur, avec fermeture de l'amenée de fluide sous pression.

La valve selon l'invention est définie par la caractéristique de la revendication 1.

Sa principale qualité est de présenter une très faible inertie tout en étant d'une grande fiabilité.

Elle est universelle en ce sens qu'elle trouve des applications et des utilisations dans des domaines variés, par exemple dans les objets et engins pneumatiques (bateaux, ballons, matelas, bouées, etc), en médecine et en chirurgie (coeurs artificiels) en aéronautique, dans les équipements sportifs (plongée sous-marine, etc). Sa miniaturisation ne pose en principe pas de problème particulier.

D'autres caractéristiques de l'invention ressortent des revendications secondaires.

Le dessin ci-annexé représente, schématiquement et à titre d'exemples non limitatifs, deux formes d'exécution de l'objet de l'invention, dans le cas de son application à une valve intégrée à l'enveloppe d'un engin pneumatique :
Figures 1 à 3 sont trois vues en coupe de la valve et de la partie de l'enveloppe sur laquelle elle est montée, respectivement lorsque les pressions intérieure et extérieure sont égales, lorsque la pression extérieure est supérieure à la pression intérieure et lorsque la pression intérieure est supérieure à la pression extérieure ;
Figure 4 est une vue similaire à celles de figures 1 à 3 montrant une commande mécanique de l'écoulement de l'air à travers la valve ;
Figure 5 est une vue en coupe d'une variante d'exécution de la valve de figures 1 à 4.

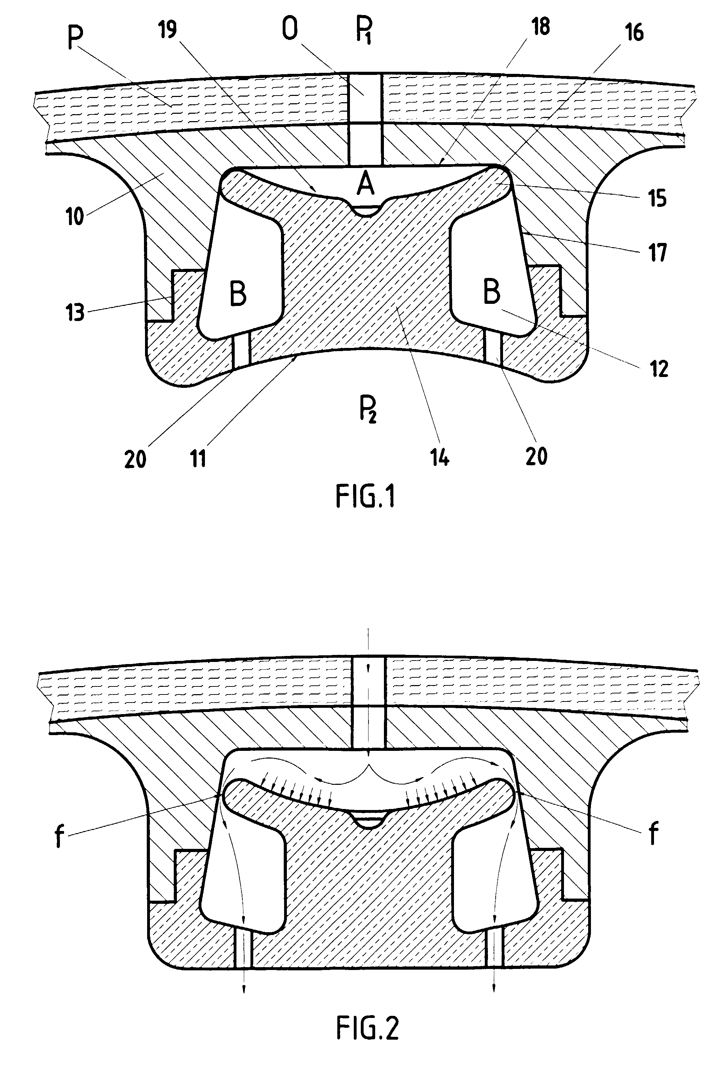

La valve représentée aux figures 1 à 4 est décrite comme partie intégrante de l'enveloppe souple d'un ballon de sport (football, basket-ball, etc) ou d'un pneumatique de véhicule (automobile, avion, etc) avec ou sans chambre à air, équipements dans lesquels la pression de gonflage revêt une grande importance.

Cette valve est constituée par un corps tubulaire 10, rigide, semi-rigide, ou souple, collé sur la surface intérieure d'une enveloppe P, coaxialement à l'orifice de gonflage O, et par un opercule 11, en caoutchouc souple, logé dans une cavité 12, de forme tronconique, du corps 10, et collé à ce dernier au niveau de portées circulaires 13, ménagées au bord d'une partie en forme de coupelle située à une extrémité du noyau 14 de l'opercule 11. L'autre extrémité du noyau est équipée d'une partie 15 en forme de coupelle.

Dans le cas représenté à la figure 1, les pressions P₁ et P₂ sont égales à la pression atmosphérique (P₁ = P₂ = P_{at.}) et le bord circulaire 16 de la coupelle 15 est appliqué contre la surface circulaire du congé reliant la paroi tronconique 17 et la surface supérieure 18 de la cavité 12.

Le corps 10 et l'opercule 11 limitent deux zones A et B, la zone A est en communication directe avec l'orifice O et la zone B est reliée par des trous 20 à l'intérieur de l'enveloppe P. L'air ne peut circuler ni dans un sens, ni dans l'autre.

Lorsque P₁ > P₂ (figure 2, gonflage du ballon), l'air insufflé à travers l'orifice O exerce sur la coupelle 15 une action qui provoque une déformation élastique de l'opercule 11 et l'ouverture d'un passage circulaire f entre le bord 16 et la paroi 17. L'air peut circuler de l'extérieur à l'intérieur du ballon et le gonfler.

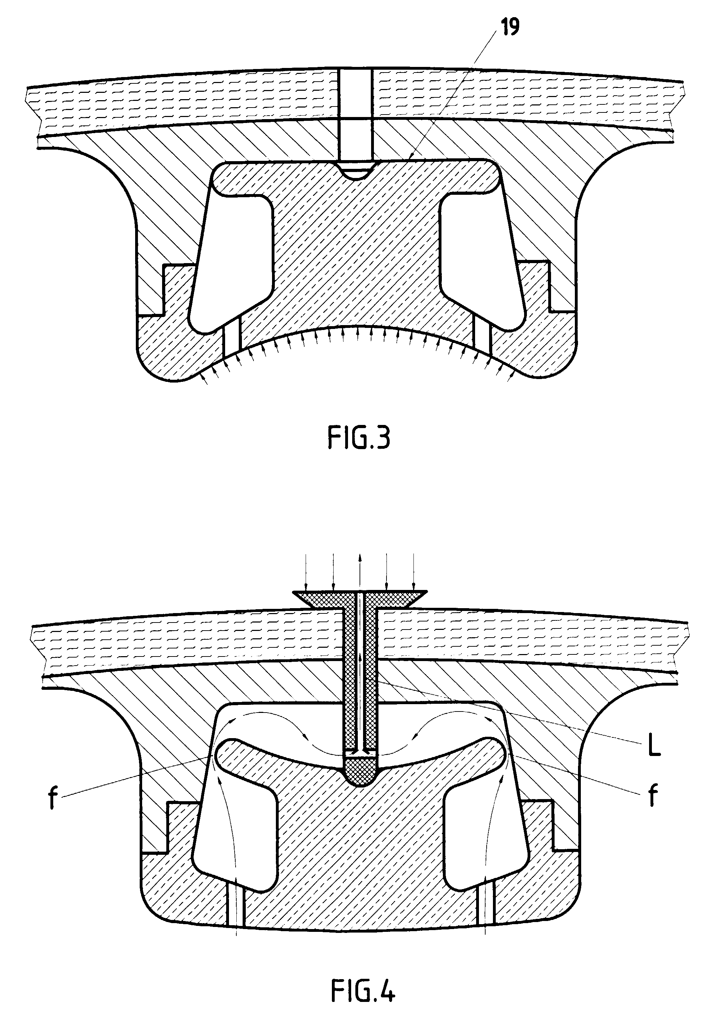

Lorsque P₂ > P₁, (figure 3), l'opercule 11 est soumis à une action dirigée de bas en haut qui le déforme élastiquement en plaquant la surface 19 de la coupelle 15 contre la surface 18, ce qui ferme le passage f.

On remarquera que, lors des déformations de l'opercule 11 illustrées aux figures 1 à 3, le bord 16 de la coupelle 15 se déplace dans le sens axial. Lorsque, dans le cas où P₂ > P₁, il s'avère nécessaire de réduire la pression P₂, on peut, comme illustré à la figure 4, permettre à une certaine quantité d'air emprisonné dans le ballon, de s'échapper à l'extérieur en introduisant une aiguille L dans l'orifice O et en exerçant une action mécanique sur la surface 19. Le dégonflage du ballon s'opère aussi longtemps que cette action est exercée. On la stoppera au moment où la pression P₂ aura atteint la valeur désirée.

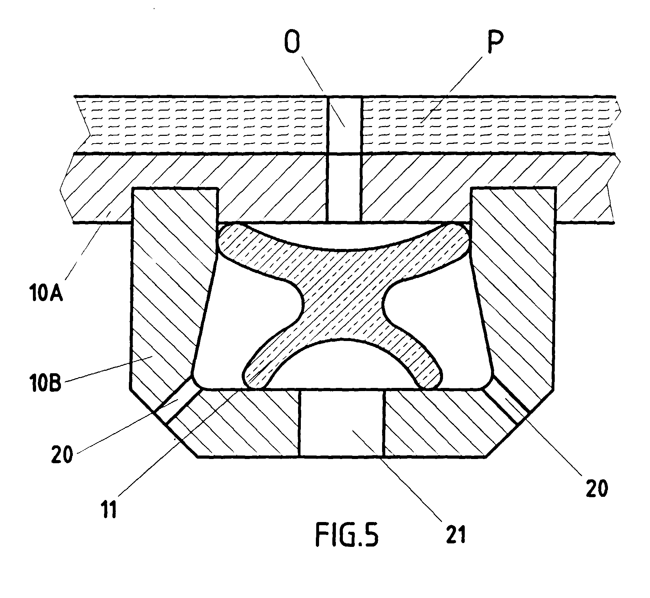

Dans la variante de la figure 5, dans laquelle la valve est réalisée en trois pièces, l'opercule 11 présente la forme d'un diabolo, comportant une coupelle destinée à prendre appui contre le fond 10A du corps tubulaire 10B, et une seconde coupelle destinée à prendre appui contre la paroi de fermeture du corps tubulaire. Cette paroi de fermeture comporte, d'une part, des trous 20 de mise en communication de la cavité annulaire délimitée par la paroi tronconique du corps tubulaire 10B et le noyau de l'opercule 11 avec l'espace à la pression P₂ et, d'autre part, un trou 21 de mise en communication de l'espace situé à l'intérieur de la seconde coupelle avec l'espace à la pression P₂.

En choisissant de manière appropriée le matériau et les dimensions de l'opercule 11, on pourra réaliser une valve qui, hormis sa grande fiabilité, présentera une très grande sensibilité liée à une très faible inertie.

On pourra gonfler les objets et engins pneumatiques avec des pompes à relativement basse pression, voire à la bouche. L'invention n'est évidemment pas limitée par le texte ci-dessus et le dessin ci-annexé.

En particulier, l'opercule 11 pourra avoir des formes très différentes de celles représentées tout en demeurant dans le champ des revendications, l'essentiel étant qu'il se déforme élastiquement sous l'action des pressions P₁ et P₂ de façon à ouvrir ou fermer un passage f entre les espaces 1 et 2 situés de part et d'autre de la valve.

Par ailleurs, la valve selon l'invention pourra être facilement miniaturisée.

Enfin, on pourra prévoir de donner à la paroi tronconique 17 un profil spécial de manière que le bord 16 de l'opercule 11 découvre, en se déplaçant axialement vers l'intérieur, des passages de section relativement importante de manière à augmenter rapidement le débit de l'air. En particulier, la paroi 17 pourrait présenter des rainures à partir d'un certain niveau.

## Revendications

1. Valve universelle permettant de régler le passage d'un fluide à travers un orifice (O) d'une paroi (P) délimitant des espaces dans lesquels règnent des pressions (P₁, P₂), éventuellement différentes, comportant un corps tubulaire (10) destiné à être fixé avec étanchéité sur l'une des faces de la paroi (P) en regard de l'orifice (O) qui débouche dans le corps tubulaire, ce dernier servant au logement d'un organe élastique déformable pour permettre ou non le passage de fluide, caractérisée en ce que l'organe élastique est constitué par un opercule comprenant un noyau (14) orienté dans l'axe de l'orifice (O) et de section inférieure à celle de l'évidement intérieur du corps tubulaire, cet évidement possédant une forme tronconique dont la section augmente de la paroi (P) vers l'extérieur, le noyau (14) comportant, du côté de la paroi (P), une partie (15) en forme de première coupelle dont le diamètre est sensiblement égal au diamètre du fond (18) du corps tubulaire, l'autre extrémité du noyau (14) étant munie d'une seconde coupelle en contact avec la jupe du corps tubulaire (10), et permettant à la coupelle (15) de prendre appui contre le fond (18) du corps lorsque les pressions (P₁) et (P₂) sont égales ou lorsque la pression (P₂) régnant du côté de la paroi contenant le corps tubulaire est supérieure à la pression (P₁), l'opercule étant déformé et permettant le passage de fluide entre le bord (16) de la première coupelle (15) et la paroi (17) du corps tubulaire (10), lorsque la pression (P₁) est supérieure à la pression (P₂) régnant du côté de la paroi (P) contenant le corps tubulaire (10), la cavité annulaire (12) située entre le noyau (14) de l'opercule et la paroi tronconique (17) du corps tubulaire étant en communication permanente avec l'espace dans lequel règne la pression (P₂).

2. Valve selon la revendication 1, caractérisée en ce que la première coupelle (15) présente, en l'absence de contraintes mécaniques ou de pression, un profil en creux dans sa face tournée vers l'orifice (O) de la paroi (P).

3. Valve selon l'une quelconque des revendications 1 et 2, caractérisée en ce que la face de l'opercule (11) disposée à l'extrémité du noyau (14) opposée à celle équipée de la première coupelle (15) présente un profil en creux, en l'absence de contraintes mécaniques ou de pression sur l'opercule.

4. Valve selon l'une quelconque des revendications 1 à 3, caractérisée en ce que la paroi tronconique (17) du corps tubulaire (10) présente, à partir d'une certaine distance du fond (18), des rainures augmentant la section de passage du fluide.

5. Valve selon l'une quelconque des revendications 1 à 4, caractérisée en ce que l'extrémité du noyau (14) située du côté opposé à la première coupelle est munie d'une jupe annulaire comportant une portée circulaire (13) fixée sur une portée circulaire complémentaire de la paroi tronconique du corps tubulaire (10), la jupe annulaire présentant des trous (20) assurant une communication permanente entre la cavité annulaire (12) délimitée par le noyau (14) et le corps tubulaire (10), d'une part, et l'espace dans lequel règne la pression (P₂), d'autre part.

6. Valve selon l'une quelconque des revendications 1 à 4, caractérisée en ce que l'opercule (11) présente, vu en coupe par un plan longitudinal, une forme de diabolo comportant une coupelle destinée à prendre appui contre le fond du corps tubulaire (10B), ce corps tubulaire étant muni d'une paroi de fermeture, parallèle au fond qui, servant à l'appui de la seconde coupelle de l'opercule, comporte des trous (20) de mise en communication de la cavité annulaire délimitée par le noyau et la paroi tronconique avec l'espace à la pression (P₂) et un trou (21) de mise en communication de l'espace situé à l'intérieur de la seconde coupelle avec l'espace à la pression (P₂).

7. Utilisation de la valve selon l'une des revendications 1 à 6, pour l'équipement d'un engin pneumatique, dans lequel un orifice (O) est ménagé dans l'enveloppe de l'engin, le fond (18) du corps tubulaire (10) est fixé sur la face intérieure de l'enveloppe, un trou ménagé dans ce fond étant disposé en regard de l'orifice de l'enveloppe, l'opercule (11) associé au corps tubulaire (10) étant situé dans l'enceinte de l'engin pneumatique destinée à être portée à une pression (P₂) supérieure à la pression atmosphérique.

## Patentansprüche

1. Allgemein verwendbares Ventil, das das Regulieren der Durchführung eines Fluides durch eine Öffnung (O) in einer Wand (P) ermöglicht, die Räume begrenzt, in denen eventuell unterschiedliche Drücke (P1, P2) herrschen, das einen rohrförmigen Körper (10), der dazu bestimmt ist, dicht auf einer der Seiten der Wand (P) gegenüber der Öffnung (O) befestigt zu sein, die in dem rohrförmigen Körper mündet, wobei der letztere zur Aufnahme eines elastischen deformierbaren Elements dient, um die Durchführung des Fluides zu ermöglichen oder nicht, umfaßt, **dadurch gekennzeichnet, daß** das elastische Element durch einen Deckel gebildet ist, der einen Kern (14) umfaßt, der entlang der Achse der Öffnung (O) ausgerichtet ist und mit geringerem Querschnitt als derjenige der der inneren Aussparung des rohrförmigen Körpers, wobei diese Aussparung eine Kegelstumpfform besitzt, deren Querschnitt sich von der Wand (P) nach außen vergrößert, der Kern (14) an der Seite der Wand (P) ein Teil (15) in der Form einer ersten Kupelle umfaßt, deren Durchmesser etwa gleich dem Durchmesser des Bodens (18) des rohrförmigen Körpers ist, wobei das andere Ende des Kerns (14) mit einer zweiten Kupelle versehen ist, die in Kontakt mit der Schürze des rohrförmigen Körpers (10) ist und der Kupelle (15) ermöglicht, sich gegen den Boden (18) des Körpers zu stützen, wenn die Brücken (P1, P2) gleich sind oder wenn der Druck (P2), der an der Seite der Wand herrscht, die den rohrförmigen Körper enthält, größer ist als der Druck (P1), wobei der Deckel defomiert wird und den Durchfluß des Fluides zwischen dem Rand (16), der ersten Kupelle (15) und der Wand (17) des rohrförmigen Körpers (10) ermöglicht, wenn der Druck (Pl) größer als der Druck (P2) ist, der auf der Seite der Wand (P) herrscht, die den rohrförmigen Körper (10) enthält, wobei der ringförmige Hohlraum (12), der zwischen dem Kern (14) des Deckels und der kegelstumpfförmigen Wand (17) des rohrförmigen Körpers angeordnet ist, in permanenter Verbindung mit dem Raum ist, in dem der Druck (P2) herrscht.

2. Ventil nach Anspruch 1, **dadurch gekennzeichnet, daß** die erste Kupelle (15) bei Abwesenheit einer mechanischen Belastung oder Druck ein gewölbtes Profil mit ihrer Seite zu der Öffnung (O) der Wand (P) gerichtet aufweist.

3. Ventil nach einem der Ansprüche 1 und 2, **dadurch gekennzeichnet, daß** die Seite des Deckels (11), die am Ende des Kerns (14) gegenüber derjenigen, die mit der ersten Kupelle (15) versehen ist, bei der Abwesenheit von mechanischen Belastungen oder Druck auf den Deckel ein gewölbtes Profil bildet.

4. Ventil nach einem der Ansprüche 1 bis 3, **dadurch gekennzeichnet, daß** die kegelstumpfförmige Wand (17) des rohrförmigen Körpers (10) ab einem gewissen Abstand zum Boden (18) zunehmende Rillen in dem Abschnitt zur Durchführung des Fluides aufweist.

5. Ventil nach einem der Ansprüche 1 bis 4, **dadurch gekennzeichnet, daß** das Ende des Kerns (14), das an der Seite gegenüber der ersten Kupelle positioniert ist, mit einer ringförmigen Schürze versehen ist, die eine kreisförmige Öffnung (13) umfaßt, die an einer komplementären kreisförmigen Öffnung der kegelstumpfförmigen Wand des rohrförmigen Körpers (10) fixiert ist, wobei die ringförmige Schürze Löcher (20) aufweist, die eine dauerhafte Verbindung zwischen dem ringförmigen Hohlraum (12), der durch den Kern (14) und den rohrförmigen Körper (10) auf der einen Seite begrenzt ist, und auf der anderen Seite dem Raum, in dem Druck (P2) herrscht, gewährleistet.

6. Ventil nach einem der Ansprüche 1 bis 4, **dadurch gekennzeichnet, daß** der Deckel (11) im Schnitt entlang einer Längsebene gesehen eine doppelkegelige Form aufweist, die eine Kupelle umfaßt, die dazu bestimmt ist, sich gegen den Boden des rohrförmigen Köpers (10 B) zu stützen, wobei dieser rohrförmige Körper mit einer Schließwand parallel zu dem Boden versehen ist, die als Stütze für die zweite Kupelle des Deckels dient, Öffnungen (20) umfaßt, um den ringförmigen Hohlraum, der durch den Kern und die kegelstumpfförmige Wand begrenzt ist, mit dem Raum mit dem Druck (P2) in Verbindung zu bringen, und eine Öffnung (21) umfaßt, um den Raum, der im Inneren der zweiten Kupelle positioniert ist, mit dem Raum mit dem Druck (P2) in Verbindung zu bringen.

7. Verwendung des Ventiles nach einem der Ansprüche 1 bis 6 für die Ausrüstung einer pneumatischen Maschine, in der eine Öffnung (O) in dem Gehäuse der Maschine vorgesehen ist, der Boden (18) des rohrförmigen Körpers (10) auf der inneren Seite des Gehäuses fixiert ist, ein Loch in diesen Boden gegenüber der Öffnung des Gehäuses vorgesehen ist, der Deckel (11), der mit dem rohrförmigen Körper (10) verbunden ist, in der Einfassung der pneumatischen Maschine positioniert ist und dazu bestimmt ist, einen Druck (P2), der größer als der Umgebungsdruck ist, zu halten.

## Claims

1. Universal valve for regulating the passage of a fluid through an orifice (O) in a wall (P) delimiting spaces in which pressures (P₁, P₂) exist, possibly different, comprising a tubular body (10) designed to be attached in a sealed manner to one of the faces of the wall (P) facing the orifice (0) which emerges into the tubular body, the latter serving to house a deformable elastic device allowing or preventing fluid to pass, characterized in that the elastic device consists of a cap including a core (14) directed in the axis of the orifice (O) and with a cross section less than that of the internal recess of the tubular body, this recess possessing a frustoconical shape, the cross section of which increases from the wall (P) outwards, the core (14) including, on the side of the wall (P), a part (15) in the form of a first cup of which the diameter is substantially equal to the diameter of the bottom (18) of the tubular body, the other end of the core (14) being provided with a second cup in contact with the skirt of the tubular body (10), and enabling the cup (15) to rest against the bottom (18) of the body when the pressures (P₁) and (P₂) are equal or when the pressure (P₂) existing on the side of the wall containing the tubular body is greater than the pressure (P₁), the cap being deformed and allowing the passage of fluid between the edge (16) of the first cup (15) and the wall (17) of the tubular body (10), when the pressure (P₁) is greater than the pressure (P₂) existing on the side of the wall (P) containing the tubular body (10), the annular cavity (12) situated between the core (14) of the cap and the frustoconical wall (17) of the tubular body being in permanent communication with the space in which the pressure (P₂) exists.

2. Valve according to claim 1, characterized in that the first cup (15) has, in the absence of mechanical constraints or pressure, a hollow profile in its face turned towards the orifice (O) of the wall (P).

3. Valve according to either of claims 1 or 2, characterized in that the face of the cap (11) positioned at the end of the core (14) opposite that fitted with the first cup (15) has a hollow profile, in the absence of mechanical constraints or pressure on the cap.

4. Valve according to any one of claims 1 to 3, characterized in that the frustoconical wall (17) of the tubular body (10) has, at a certain distance from the bottom (18), grooves increasing the cross section for the passage of the fluid.

5. Valve according to any one of claims 1 to 4, characterized in that the end of the core (14) situated on the side opposite the first cup is provided with an annular skirt including a circular bearing surface (13) fixed to a complementary circular bearing surface of the frustoconical wall of the tubular body (10), the annular skirt having holes (20) providing permanent communication between, on the one hand, the annular cavity (12) delimited by the core (14) and the tubular body (10) and, on the other hand, the space in which the pressure (P₂) exists.

6. Valve according to any one of claims 1 to 4, characterized in that the cap (11) has, seen in a section through a longitudinal plane, a diabolo shape having a cup designed to rest against the bottom of the tubular body (10B), this tubular body being provided with a closing wall, parallel to the bottom which, acting as a support for the second cup of the cap, includes holes (20) for putting the annular cavity delimited by the core and the frustoconical wall into communication with the space at the pressure (P₂) and a hole (21) for putting the space situated inside the second cup into communication with the space at the pressure (P₂).

7. Use of the valve according to one of claims 1 to 6 for equipping a pneumatic engine, in which an orifice (O) is provided in the casing of the engine, the bottom (18) of the tubular body (10) is fixed to the inner face of the casing, a hole provided in this bottom being positioned facing the orifice of the casing, the cap (11) associated with the tubular body (10) being situated in the chamber of the pneumatic engine designed to be brought to a pressure (P₂) greater than atmospheric pressure.
